# Europäisches Patentamt
## European Patent Office
## Office européen des brevets

(11) Veröffentlichungsnummer: **0 112 961**
**B1**

(12) **EUROPÄISCHE PATENTSCHRIFT**

(45) Veröffentlichungstag der Patentschrift:
**27.12.85**

(21) Anmeldenummer: **83104204.9**

(22) Anmeldetag: **29.04.83**

(51) Int. Cl.⁴: **B 29 D 31/00**

(54) Verfahren zur Herstellung eines Wellendichtringes.

(30) Priorität: **14.12.82 DE 3246152**

(43) Veröffentlichungstag der Anmeldung:
**11.07.84 Patentblatt 84/28**

(45) Bekanntmachung des Hinweises auf die Patenterteilung:
**27.12.85 Patentblatt 85/52**

(84) Benannte Vertragsstaaten:
**AT BE CH DE FR GB IT LI LU NL SE**

(56) Entgegenhaltungen:
**AT - B - 172 176**
**AT - B - 214 628**
**DE - A - 2 460 185**
**FR - A - 1 412 612**
**GB - A - 954 998**

(73) Patentinhaber: **Firma Carl Freudenberg, Höhnerweg 2,
D-6940 Weinheim/Bergstrasse (DE)**

(72) Erfinder: **Schmitt, Wilhelm, Dr., Im Vordersberg 8,
D-6148 Heppenheim 7 (DE)**

(74) Vertreter: **Weissenfeld-Richters, Helga, Dr.,
Höhnerweg 2, D-6940 Weinheim/Bergstrasse (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft ein Verfahren zur Herstellung eines Wellendichtringes, bei dem von einem Hohlzylinder ein gegebenenfalls mit hydrodynamisch wirkenden Rückförderelementen versehenes Ringelement abgestochen, trompetenartig deformiert und entlang des umlaufenden, sich in radialer Richtung nach außen erstreckenden Randes mit einem Versteifungsring flüssigkeitsdicht verbunden wird.

Das vorgenannte Verfahren ist aus DE-A-2 460 185 bekannt. Das Ringelement wird dabei in Gestalt einer dünnen, ebenen Scheibe von dem sich drehenden Hohlzylinder aus PTFE abgestochen, auf einer der beiden axialen Begrenzungsflächen im Bereich des Innenumfanges mit einem hydrodynamisch wirkenden Rückförderelement versehen, was durch einen spanabhebenden Bearbeitungsvorgang oder einen Prägevorgang erfolgen kann, und anschließend in diesem Bereich derart eingestülpt, daß sich ein kegelförmiger Vorsprung ergibt. Das Dichtelement hat dadurch in dem der abrasiven Einwirkung des relativ bewegten Maschinenteiles ausgesetzten Bereich eine verminderte Wandstärke, was neben einer Verminderung des Verschleißvolumens vor allem eine schlechte Flexibilität beim Auftreten radialer Wellenschwingungen bedingt. Die Molekularstruktur des verwendeten Werkstoffes erfährt durch den Tiefziehvorgang im Bereich der dynamischen Abdichtungszone eine Orientierung in Längsrichtung, was die Gewährleistung gleichbleibender Anpreßdrücke über lange Zeiträume erschwert. Die Automatisierung des Herstellungsverfahrens ist außerdem problematisch insofern, als sich Herstellung, Umformung und Befestigung des Dichtelementes in dem Versteifungsring nur schwierig in einer kompakten Einheit zusammenfassen lassen.

Der Erfindung liegt die Aufgabe zugrunde, ein Verfahren der vorstehend behandelten Art derart weiter zu entwickeln, daß die angegebenen Nachteile nicht mehr auftreten. Das Verfahren soll platzsparend automatisierbar sein und die kostengünstige Herstellung eines Wellendichtringes ermöglichen, der eine sich auch beim Auftreten radialer Wellenschwingungen gut an die Welle anschmiegende Dichtlippe aufweist, und die in dem der abrasiven Wirkung des relativ beweglichen Maschinenteiles ausgesetzten Bereich ein vergrößertes Verschleißvolumen aufweist.

Diese Aufgabe wird erfindungsgemäß bei einem Verfahren der eingangs genannten Art dadurch gelöst, daß das gegebenenfalls auf der Außen- und/oder der Innenseite mit hydrodynamisch wirkenden Rückförderelementen versehene Ringelemente in Gestalt einer schlauchförmigen Hülse von dem Hohlzylinder abgestochen wird, daß die Hülse oder vor dem Abstechen der Hohlzylinder axial auf einen sich in seinem Durchmesser stetig erweiternden Formling aufgeschoben und im vorspringenden Teil zu einem in radialer Richtung auslaufenden Flansch umgeformt wird, mit dem Versteifungsring verbunden wird.

Zur Herstellung des Ringelementes können Hohlzylinder aus beliebigen, einschlägig verwendeten polymeren Werkstoffen zur Anwendung kommen, beispielsweise aus Gummi, aus PTFE, aus Polyamid sowie aus Verbundwerkstoffen, beispielsweise einem oder mehreren der vorgenannten Werkstoffe mit einem Gehalt an Fasern. Die Wandstärke beträgt bei Wellendurchmessern von 5 bis 220 mm 0,4 bis 3 mm, und sie kann bei größeren Wellendurchmessern steigen bis auf einen Wert von ca. 5 mm.

Der Innendurchmesser des Hohlzylinders und damit auch des Ringelementes ist zur Gewährleistung der benötigten Anpreßkraft geringfügig kleiner als der Durchmesser der abzudichtenden Welle. Eine exakte Maßrelation läßt sich hierfür nicht angeben, weil die Elastizität des verwendeten Werkstoffes, das Auftreten radialer Wellenschwingungen, der Druck und die Temperatur des abgedichteten Mediums sowie der Reibungskoeffizient und die Wellendrehzahl hierauf einen gegebenenfalls sich gegenseitig überlagernden Einfluß haben. Die für den Einzelfall zweckmäßigste Festlegung erfordert daher Vorversuche, die jedoch dem einschlägig erfahrenen Fachmann ohne weiteres zuzumuten sind.

Die Verwendung von sekundären Andrückelementen, beispielsweise von Ringwendelfedern ist möglich. Ihre Verwendung ist daher in die diesbezüglichen Überlegungen einzubeziehen.

Die von dem Hohlzylinder abgestochenen Ringelemente können die Form einer einfachen Hülse haben, d. h. die Gestalt eines Hohlzylinders mit geringer Wandstärke, der durch parallel bzw. sich rechtwinklig zur Rotationsachse erstreckende Flächen begrenzt ist. Die axiale Länge ist in jedem Falle größer als die Wandstärke.

Das Abstechen der Hülse von dem Hohlzylinder kann auch nach dem Umformen und gegebenenfalls der Verbindung mit dem Versteifungsring vorgenommen werden.

Für Anwendungsfälle, in denen bei hoher Wellendrehzahl ein niederviskoses Medium abzudichten ist, hat es sich als vorteilhaft bewährt, wenn die Hülse im Bereich der auf Reibung beanspruchten Dichtungszone hydrodynamische Rückförderelemente für unter der Dichtlippe hindurchgedrungene Leckflüssigkeit aufweist. Diese haben im allgemeinen die Gestalt einer wendelförmigen Nute, die durch einen prägenden oder einen schneidenden Bearbeitungsvorgang erzeugt wurde. Die Anbringung auf dem Außenumfang ist wegen der geringen Wandstärke der Hülse und der daraus resultierenden, geringen mechanischen Widerstandsfähigkeit erheblich einfacher als die Anbringung auf dem Innenumfang. Die Anbringung auf dem Außenumfang wird daher bevorzugt, auch wenn hierdurch ein Umstülpen der Hülse vor oder im Anschluß an ihre Verbindung mit dem Versteifungsring erforderlich ist. Die hohlzylindrische Gestalt der Hülse wird im übrigen durch das Anbringen der hydrodynamisch wirkenden Rückförderelemente nicht nennenswert verändert.

Die Hülse wird zur Erzielung der gewünschten Umformung axparallel auf einen Formling aufgesetzt und vorgeschoben, der einen sich in Vorschubrichtung trompetenartig erweiterndern Durchmesser aufweist. Die zur Vorschubrichtung ursprünglich senkrechte vordere Stirnwand der Hülse erfährt hierdurch eine Ablenkung in Umfangsrichtung, und bildet schließlich die im wesentlichen achsparallel verlaufende Begrenzungsfläche eines sich in radialer Richtung erstreckenden Flansches, der der Verbindung mit dem Versteifungsring dient. Die zur Rotationsachse senkrechten und achsparallelen Teilbereiche der fertig geformten Hülse gehen gleichmäßig ineinander über, wodurch die sich beim Auftreten radialer Wellenschwingungen ergebende Biegebeanspruchung des Profils auf einen großen Bereich verteilt ist. Eine über lange Zeiträume ausgeglichene, gleichmäßige Flexibilität ist hiervon die Folge.

Die Wandstärke der sich achsparallel und senkrecht zur Rotationsachse erstreckenden Teilbereiche nimmt in radialer Richtung nach außen gleichmäßig ab, wodurch im Bereich der der Reibung ausgesetzten Zonen ein großes Verschleißvolumen zur Verfügung steht. Der relativ vergrößerte Querschnitt im Bereich der genannten Zone erlaubt, bezogen auf das Gesamtgewicht der Hülse, die Erzielung einer optimalen Anpreßkraft, während die zugleich vorhandene, relative Verminderung des Querschnittes im Bereich der radial außenliegenden Einspannzone zu einer verbesserten Flexibilität führt. Der dynamisch dichtende Teil vermag dadurch den radialen Schwingungen einer Welle besonders gut zu folgen.

Der flanschartig nach außen zeigende Teil der umgeformten Hülse kann durch eine Klemmverbindung in einem gegebenenfalls mehrteilig ausgebildeten Versteifungsring verankert werden bzw. durch adhäsive Kräfte in einen gegebenenfalls unmittelbar angeformten Versteifungsring aus einem polymeren Werkstoff. Beide Möglichkeiten stehen grundsätzlich offen, der Verwendung von Versteifungsringen aus Stahl wird jedoch im Hinblick auf die mitunter erheblichen mechanischen Belastungen einer automatischen Montage häufig der Vorzug gegeben.

Das erfindungsgemäß vorgeschlagene Verfahren wird nachfolgend anhand der in der Anlage beigefügten Zeichnungen weiter verdeutlicht. Es zeigt

Fig. 1 ein geöffnetes Werkzeug, in welches die das Ringelement bildende Hülse sowie die Bestandteile eines zweiteiligen Versteifungsringes eingesetzt sind.

Fig. 2 das Werkzeug nach Fig. 1 in geschlossenem Zustand.

Fig. 3 ein Werkzeug ähnlich Fig. 1, in welches lediglich die das Ringelement bildende Hülse eingesetzt ist.

Fig. 4 das Werkzeug nach Fig. 3 in geschlossenem Zustand nach dem Anformen eines Versteifungsringes aus einem polymeren Werkstoff.

Zur Herstellung eines Wellendichtringes mit dem vorgeschlagenen Verfahren werden in einem ersten Arbeitsschritt von einem gegebenenfalls endlos extrudierten Schlauch aus einem polymeren Werkstoff hülsenartig ausgebildete Ringelemente abgestochen. Diese können vor oder im Anschluß an das Abstechen mit hydrodynamisch wirkenden Rückförderelementen versehen werden, beispielsweise durch Einschneiden oder Einprägen einer oder mehrerer wendelförmig verlaufender Nuten in den Innen- und/ oder in den Außenumfang.

Der Innendurchmesser der Hülse ist herstellungsbedingt geringfügig kleiner als der Außendurchmesser der abzudichtenden Welle. Die Dichtlippe des fertigen Wellendichtringes erfährt hierdurch während der Montage des Wellendichtringes eine elastische Aufweitung, was die zur Erzielung eines guten Abdichtungsergebnisses notwendige Anpressung zur Folge hat. Die Verwendung sekundärer Andrückelemente ist möglich, wie beispielsweise von Ringwendelfedern oder einer Vielzahl von auf dem Umfang verteilten Federzungen.

Der Schlauch kann aus irgendeinem einschlägig verwendeten Werkstoff bestehen. Bevorzugt kommt PTFE zur Anwendung, weil dieses bei einem besonders niedrigen Reibungskoeffizienten und einer großen Temperaturbeständigkeit gleichbleibende Anpreßkräfte der Dichtlippe über lange Zeiträume gewährleistet.

Eine beispielhafte Ausführung einer Hülse aus PTFE zur Herstellung eines Wellendichtringes für eine Welle mit einem Durchmesser von 85 mm hat bei einer Länge von 12 mm einen Innendurchmesser von 82 mm und einen Außendurchmesser von 84 mm. Das bei dem fertigen Wellendichtring in Reibungskontakt mit der abgedichteten Welle befindliche Ende, somit der als Dichtlippe wirkende Teil, weist auf der Innenseite eine spiralförmige Nut der Tiefe 0,4 mm und die Steigung 0,8 mm auf. Die spiralförmige Nut ist um 40° gegen die Scheibenfläche geneigt.

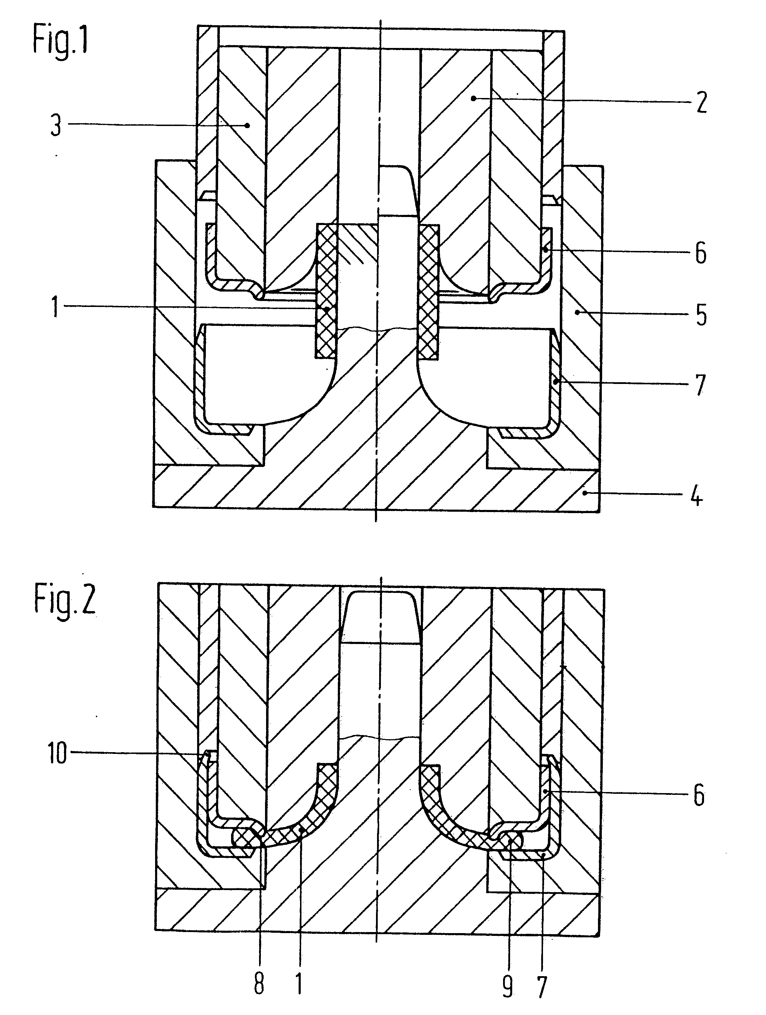

Die Hülse 1 wird anschließend in der in Fig. 1 angedeuteten Weise in ein geöffnetes Formwerkzeug eingesetzt. Dieses besteht aus dem Werkzeugoberteil 2 mit dem taktabhängig vorschiebbaren Schließer 3 und dem Werkzeugunterteil 4 mit dem unabhängig davon beweglichen Auswerfer 5. Der Schließer nimmt relativ zu dem Werkzeugoberteil eine rückverlagerte Position ein und er trägt den lose aufgesteckten Innenring 6. In den Auswerfer ist der zugehörige Versteifungsring 7 lose eingelegt. Das Werkzeug ist damit fertig vorbereitet für die Umformung der Hülse 1 und deren gegenseitige Verbindung mit dem Innenring 6 und dem Versteifungsring 7. Der diesbezügliche Arbeitsschritt wird durch eine koaxiale Gegeneinanderbewegung des Werkzeugoberteiles 2 gegen das Werkzeugunterteil 4 eingeleitet. Die Hülse 1 erfährt hierdurch eine allmähliche, trompetenartige Aufweitung ihres unteren Bereiches, die ihren Abschluß findet in der Ausbildung eines zwischen den radial nach innen weisenden Schenkeln des Innenringes 6 und des Versteifungsringes 7 angeordneten Flansches 9.

Im nächstfolgenden Arbeitsschritt folgt der Schließer 3 der vorausgegangenen Bewegung des Werkzeugoberteiles 2, wodurch der mit einem umlaufenden Wulst 8 versehene Innenring 6 in axialer Richtung an den Flansch 9 angepreßt wird.

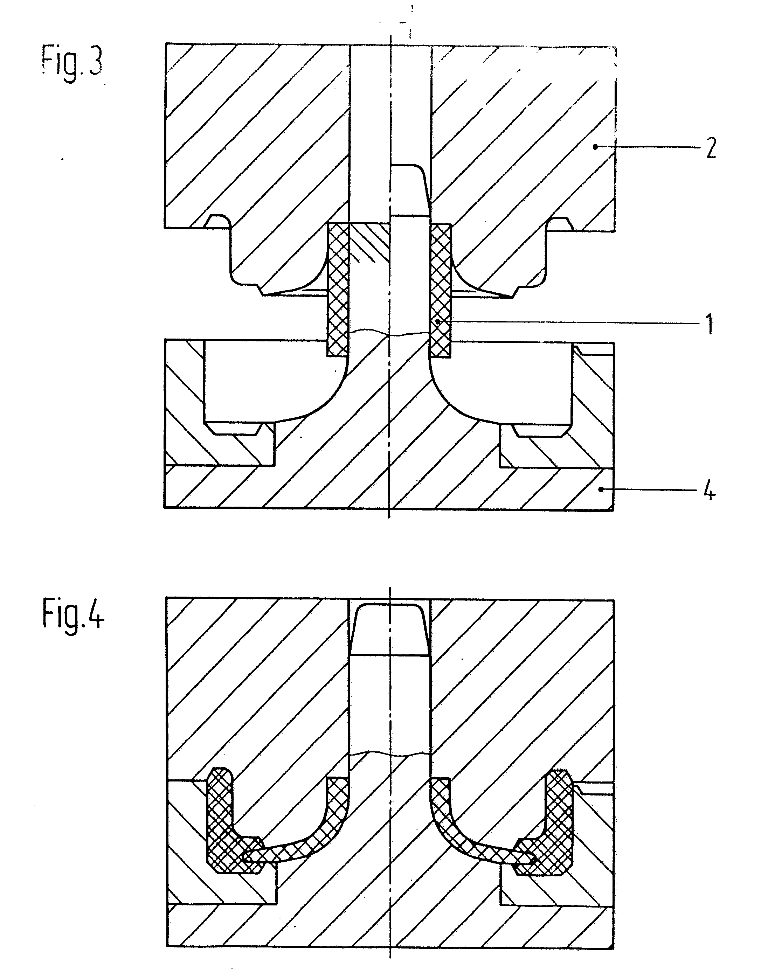

Eine mechanisch stabile und flüssigkeitsdichte Festlegung des Flansches ist hiervon die Folge. Die gegenseitige Zuordnung erfährt eine dauerhafte Stabilisierung durch das gleichzeitig oder nachfolgende Umbördeln des axial über den Innenring 6 überstehenden Endes des Versteifungsringes 7, wie in Fig. 2 gezeigt. Das Werkzeug kann damit geöffnet werden, der Wellendichtring kann entnommen und seiner bestimmungsgemäßen Verwendung zugeführt werden.

Die Fig. 3 und 4 nehmen Bezug auf die Herstellung eines Wellendichtringes, bei dem der Versteifungsring aus einem polymeren Werkstoff besteht. Die in das geöffnete Werkzeug eingesetzte Hülse 1 kann in ihren Abmessungen und hinsichtlich des verwendeten Werkstoffes den vorstehenden Ausführungen entsprechen. Sie wurde zusätzlich am unteren Ende einer Ätzbehandlung auf Natriumbasis unterworfen, um eine gute Anbindung des flüssig angeformten Werkstoffes des Versteifungsringes zu erzielen.

Die Hülse 1 erfährt am unteren Ende während der koaxialen Gegeneinanderbewegung des Werkzeugoberteiles 2 gegen das Werkzeugunterteil 4 eine trompetenartige Aufweitung ihres Durchmessers, die ihren Abschluß findet in der Ausbildung eines umlaufenden Flansches, der in einen von dem Werkzeugober- und dem Werkzeugunterteil umschlossenen, ringförmigen Hohlraum hineinragt. Der Hohlraum hat entsprechend der Gestalt üblicher Versteifungsringe ein winkelförmiges Profil. Er wird in einem Spritzvorgang mit Epoxidharz gefüllt, welches im Zuge seiner Erstarrung eine feste Bindung mit dem Flansch eingeht. Der fertige Wellendichtring kann anschließend entnommen und seiner bestimmungsgemäßen Verwendung zugeführt werden. Das geschlossene Werkzeug ist in Fig. 4 gezeigt.

**Patentansprüche**

1. Verfahren zur Herstellung eines Wellendichtringes, bei dem von einem Hohlzylinder ein gegebenenfalls mit hydrodynamisch wirkenden Rückförderelementen versehenes Ringelement abgestochen, trompetenartig deformiert und entlang des umlaufenden, sich in radialer Richtung nach außen erstreckenden Randes mit einem Versteifungsring (6, 7) flüssigkeitsdicht verbunden wird, dadurch gekennzeichnet, daß das gegebenenfalls auf der Außen- und/oder Innenseite mit hydrodynamisch wirkenden Rückförderelementen versehene Ringelement in Gestalt einer schlauchförmigen Hülse (1) von dem Hohlzylinder abgestochen wird, daß die Hülse (1) oder vor dem Abstechen der Hohlzylinder axial auf einen sich in seinem Durchmesser stetig erweiternden Formling aufgeschoben und im vorspringenden Teil zu einem in radialer Richtung auslaufenden Flansch (9) umgeformt wird, der mit dem Versteifungsring (6, 7) verbunden wird.

2. Verfahren nach Anspruch 1, dadurch gekennzeichnet, daß die hydrodynamisch wirkenden Rückförderelemente durch einen spanabhebenden Bearbeitungsvorgang und/oder eine Prägung erzeugt werden.

3. Verfahren nach Anspruch 1 oder 2, dadurch gekennzeichnet, daß das Abstechen der Hülse von dem Hohlzylinder nach dem Umformen und gegebenenfalls der Verbindung mit dem Versteifungsring vorgenommen wird.

4. Verfahren nach Anspruch 1 bis 3, dadurch gekennzeichnet, daß das Verbinden des Flansches mit dem Versteifungsring und dessen Herstellung aus einem polymeren Werkstoff nach dem Anspritzverfahren durchgeführt werden.

**Claims**

A method of manufacturing a radial lip seal in which a ring element, provided if necessary with hydrodynamically acting return elements, is cut from a hollow cylinder, deformed in the shape of a trumpet and connected in a fluid-tight manner to a stiffening ring (6, 7) along the rotating edge extending outwards in the radial direction, characterised in that the ring element, which is provided on the outer and/or inner side with hydroxynamically acting return elements, is cut in the form of a hose-shaped sleeve (1) from the hollow cylinder, that either the sleeve (1) or the hollow cylinder before the cutting off operation is pushed axially onto a casting which extends with a constant diameter and that the sleeve or cylinder as the case maybe is shaped in the projecting part into a flange (9) which extends outwards in the radial direction and is connected to the reinforcing ring (6, 7).

2. A method according to claim 1, characterised in that the hydrodynamically acting return elements are produced by a machining operation and/or by stamping.

3. A method according to claim 1 or 2, characterised in that the sleeve is cut from the hollow cylinder after the shaping operation and if necessary after connection to the reinforcing ring.

4. A method according to any of claims 1 to 3, characterised in that the flange is connected to the reinforcing ring and the latter is manufactured from a polymer material after the injection process.

**Revendications**

1. Procédé de fabrication d'une garniture d'étanchéité pour un arbre, selon lequel on sectionne d'un cylindre creux un élément annulaire, éventuellement pourvu d'éléments de refoulement à action hydrodynamique, on déforme cet élément annulaire en forme de trompette et on le relie le long de son bord de révolution s'étendant radialement vers l'extérieur, de façon étanche, avec une bague de renforcement (6, 7), caractérisé en ce que l'élément annulaire, éventuellement pourvu du côté extérieur et/ou intérieur d'éléments de refoulement à action hydrodynamique est sectionné sous forme d'une douille tubulaire (1) d'un cylindre creux, en ce que la douille (1) ou bien le cylindre creux avant son tronçonnage, est glissé axialement sur une matrice dont le diamètre s'élargit régulièrement et est déformée dans la partie saillante en une bride (9) s'étendant en direction radiale, qui est reliée à la bague de renforcement (6, 7).

2. Procédé selon la revendication 1, caractérisé en ce que les éléments de refoulement à action hydrodynamique sont réalisés par un procédé d'estampage et/ou un procédé d'enlèvement de copeaux.

3. Procédé selon la revendication 1 ou 2, caractérisé en ce que le tronçonnage de la douille du cylindre creux est réalisé après la déformation et, le cas échéant, après la liaison avec la bague de renforcement.

4. Procédé selon l'une des revendications 1 à 3, caractérisé en ce que la liaison de la bride avec la bague de renforcement et la réalisation de celuici en un matériau polymère est effectuée par un procédé d'injection.

Fig.1

3

2

6

1

5

7

4

Fig.2

10

6

8    1

9   7

Fig.3

2

1

4

Fig.4